# EUROPEAN PATENT SPECIFICATION

(11) **EP 2 534 237 B1**
(45) Date of publication and mention of the grant of the patent: **12.11.2014**
(21) Application number: 11700854.0
(22) Date of filing: 26.01.2011
(51) Int. Cl.: C11D 3/40

(54) **Laundry treatment composition comprising bis-azo shading dyes**
Wäschebehandlungsmittel enthaltend Bis-Azo-Abtönungsfarbstoffe
Compositions pour le traitement du linge comprenant des colorants d'ombrage bis-azo

(30) Priority: 12.02.2010 EP 10153515
(43) Date of publication of application: 19.12.2012
(73) Proprietor: Unilever PLC, London, Greater London EC4Y 0DY (GB); Unilever N.V., 3013 AL Rotterdam (NL)
(72) Inventor: BATCHELOR, Stephen, Norman, Wirral Merseyside CH63 3JW (GB); BIRD, Jayne, Michelle, Wirral Merseyside CH63 3JW (GB)
(74) Representative: Avila, David Victor
(86) International application number: PCT/EP2011/051071
(87) International publication number: WO 2011/098356

(56) References cited:
- WO-A1-2005/003274
- WO-A1-2005/014769
- WO-A1-2006/004876
- WO-A1-2007/003524

## Description

### Field of Invention

The present invention concerns laundry shading dye compositions.

### Background of the Invention

WO2005/003274 (Unilever) and WO2005/014769 (Ciba) discloses specific anionic bis-azo direct dyes in laundry formulations for improving garment whiteness. Direct Violet 9, direct violet 51, direct violet 99 and direct violet 35 are examples of such dyes.

WO2007/003524 (Ciba) discloses anionic bis-azo direct dyes, with oxyalkylene groups, and their use in production of white paper.

### Summary of the Invention

The bis-azo oxyalkylene dyes as used in the present invention provide improved performance from laundry formulations. The dyes have higher water solubility, high whitening performance and higher light fastness in domestic laundry applications than comparable dyes of the prior art.

In another aspect the present invention provides a laundry treatment composition comprising:
(i) from 2 to 70 wt% of a surfactant; and,
(ii) from 0.00001 to 0.5 wt%, preferably 0.00005 to 0.001 wt%, of a bis-azo oxyalkylene dye, wherein the bis-azo oxyalkylene dye is selected from structure (I) and structure (II): 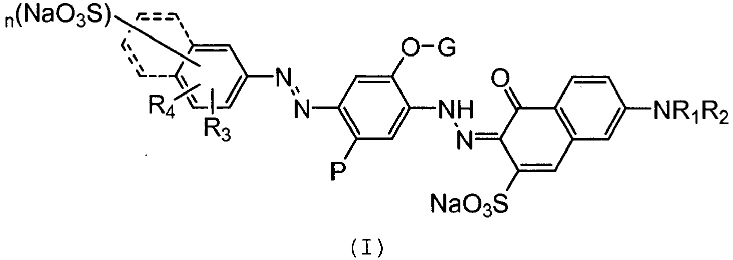 and 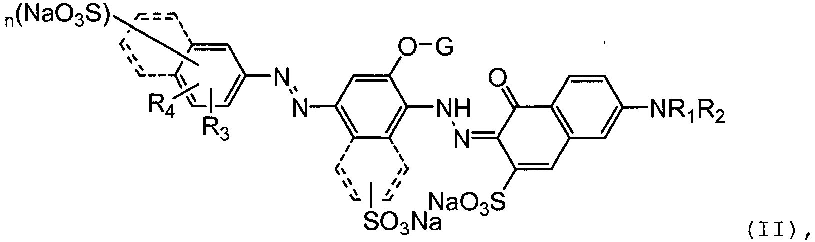 wherein:
   n is selected from: 0; 1; and, 2;
   R₁ is H; and CH₃; preferably H
   R₂ is selected from: COCH₃; COC₂H₅; H; and, Ph;
   R₃ and R₄ are independently selected from: H; Me; and, Et;
   P is selected from: C1-C4-alkyl; OC1-C4-alkyl; and, an oxyalkylene group having one or more repeating units; and, G is an oxyalkylene group having 1 or more repeating units.

In a further aspect the present invention provides a method of treating a laundry textile, the method comprising the steps of:
(i) treating a textile with an aqueous solution of the bis-azo oxyalkylene dye, the aqueous solution comprising from 0.1 ppb to 500 ppm of the bis-azo oxyalkylene dye (preferably 1 to 1000ppb, most preferably 2 to 100ppb); and, from 0.0 g/L to 3 g/L, preferably 0.3 to 2 g/L, of a surfactant;
(ii) optionally rinsing; and,
(iii) drying the textile.

Preferably the method is domestic and performed in a front loading automatic washing machine, top loading automatic washing machine, or by hand.

Preferably the laundry treatment composition is granular and preferably the granular composition contains sodium carbonate, with predominately anionic surfactants, most preferably LAS.

### DETAILED DESCRIPTION OF THE INVENTION

The bis-azo oxyalkylene dye, as indicated by the dashed structures, may have naphthyl rings instead of the phenyl rings. The sulphonate, R₃ and R₄ substituent may be attached to the phenyl ring or the naphthyl ring.

When R₂ is a Ph group, the Ph group may be substituted by further organic groups. When the Ph group is substituted the following are preferred groups: halogen, NH₂, NO2, C1-C4 alkyl, and OC1-C4 alkyl.

The preferred embodiments of the bis-azo oxyalkylene dye are discussed below.

Preferably, G is an oxyalkylene group having from 1 to 20 repeating units.

Preferably, G is an oxyalkylene group selected from: [(CH₂CR₅HO)ₓ(CH₂CR₆HO)_{y}R₇] wherein x+y ≤ 5, wherein y ≥ 1 and z = 0 to 5, R₅ is selected from: H; CH₃; CH₂O(CH₂CH₂O)₂H and mixtures thereof; R₆ is selected from: H; CH₂O(CH₂CH₂O)_{z}H and mixtures thereof; and, R₇ is selected from: H; and, CH₃. Most preferably x+y ≤ 2, wherein y ≥ 1 and z = 0 to 2.

Preferably, the oxyalkylene group is selected from: ethylene oxide; propylene oxide; glycidol oxide; butylene oxide; and, mixtures thereof.

Preferably, P is CH₃.

Preferably, G is: (CH₂CH₂O)ₘH wherein m = 1 to 4. Most preferably m = 1.

Preferably, n is selected from: 1 or 2.

Preferably, the dye is of structure (I).

When P is an oxyalkylene group it is preferably selected from: [(CH₂CR₅HO)ₓ(CH₂CR₆HO)_{y}R₇] wherein x+y ≤ 5, wherein y ≥ 1 and z = 0 to 5, R₅ is selected from: H; CH₃; CH₂O(CH₂CH₂O)_{z}H and mixtures thereof; R₆ is selected from: H; CH₂O(CH₂CH₂O)_{z}H and mixtures thereof; and, R₇ is selected from: H; and, CH₃. The oxyalkylene group is terminated (chain capped) is H or Me, preferably H.

P&G groups are preferably different.

The dyes show lower spotting to textiles.

Preferred examples of such dyes are:

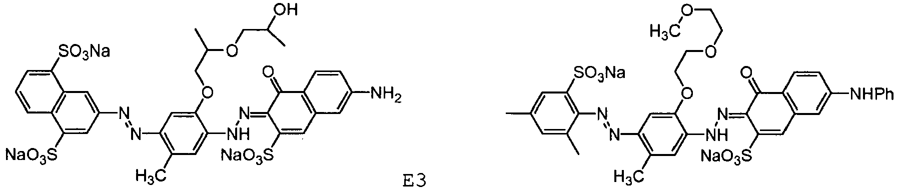

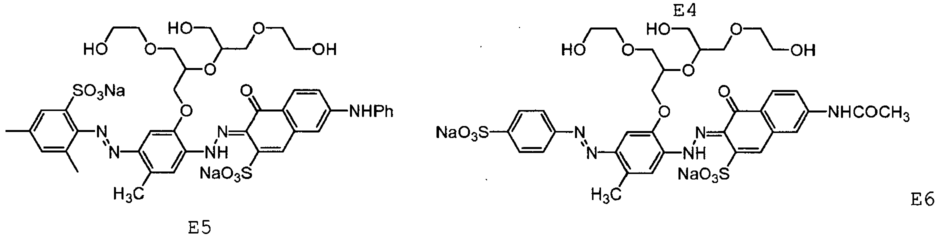

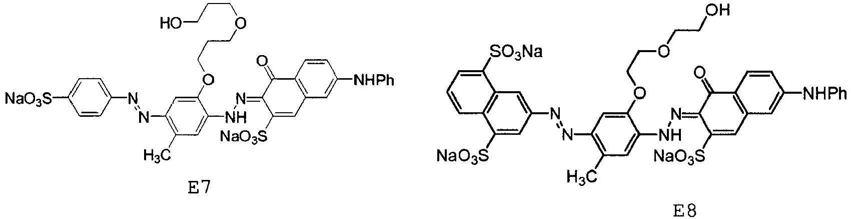

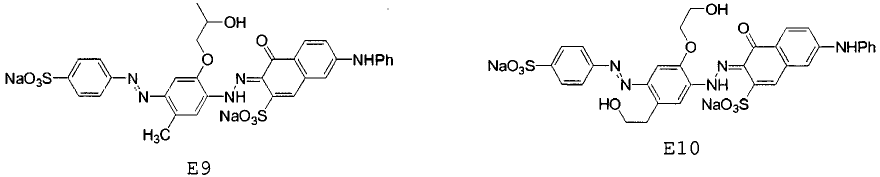

### OTHER DYES

In a preferred embodiment of the invention, other shading colourants may be present. They are preferably selected from hydrophobic dyes more preferably solvent and disperse dyes such as solvent violet 13, disperse violet 27, disperse violet 28 and alkoxylated thiophene dyes.

A hydrophobic dye is uncharged pH = 8.

Even more preferred is the presence of acid azine dyes as described in WO 2008/017570; the level of the acid azine dyes should be in the range from 0.0001 to 0.1 wt%. The acid azine dyes provide benefit predominately to the pure cotton garments and the cationic phenazine dyes to the polycotton garments. Preferred acid azine dyes are acid violet 50, acid blue 59 and acid blue 98. Blue and Violet cationic phenazine dyes may also be present as discussed in WO2009/141172 and WO2009/141173.

Photobleaches such as sulphonated Zn/Al phthalocyanins may be present.

### SURFACTANT

The laundry composition comprises between 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are C₆ to C₂₂ alkyl phenol-ethylene oxide condensates, generally 5 to 25 EO, i.e. 5 to 25 units of ethylene oxide per molecule, and the condensation products of aliphatic C₈ to C₁₈ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher C₈ to C₁₈ alcohols, produced for example from tallow or coconut oil, sodium and potassium alkyl C₉ to C₂₀ benzene sulphonates, particularly sodium linear secondary alkyl C₁₀ to C₁₅ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium C₁₁ to C₁₅ alkyl benzene sulphonates and sodium C₁₂ to C₁₈ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a C₁₆ to C₁₈ primary alcohol sulphate together with a C₁₂ to C₁₅ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric conditioner.

### CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one C₁₂ to C₂₂ alkyl chain.

It is preferred if the quaternary ammonium compound has the following formula: 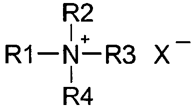 in which R¹ is a C₁₂ to C₂₂ alkyl or alkenyl chain; R², R³ and R⁴ are independently selected from C₁ to C₄ alkyl chains and X⁻ is a compatible anion. A preferred compound of this type is the quaternary ammonium compound cetyl trimethyl quaternary ammonium bromide.

A second class of materials for use with the present invention are the quaternary ammonium of the above structure in which R¹ and R² are independently selected from C₁₂ to C₂₂ alkyl or alkenyl chain; R³ and R⁴ are independently selected from C₁ to C₄ alkyl chains and X⁻ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

### BUILDERS OR COMPLEXING AGENTS

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

0.8-1.5 M₂O. Al₂O₃. 0.8-6 SiO₂

where M is a monovalent cation, preferably sodium. These materials contain some bound water and are required to have a calcium ion exchange capacity of at least 50 mg CaO/g. The preferred sodium aluminosilicates contain 1.5-3.5 SiO₂ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

### FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

### PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

### POLYMERS

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

### ENZYMES

One or more enzymes are preferred present in a composition of the invention and when practicing a method of the invention.

Preferably the level of each enzyme is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P*. *pseudoalcaligenes* (EP 218 272), *P. cepacia* (EP 331 376), *P*. *stutzeri* (GB 1,372,034), *P. fluorescens, Pseudomonas* sp. strain SD 705 (WO 95/06720 and WO 96/27002), P. *wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases A₁ and A₂ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C*. *cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

### ENZYME STABILIZERS

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

Dye weights refer to the sodium or chloride salts unless otherwise stated.

Preferably the laundry treatment composition is in a plastic bag or a cardboard box.

For ease of use it is preferred that the laundry treatment composition is present in 0.5 to 5kg packs.

### EXPERIMENTAL

### Example 1

A wash solution was created in demineralised water which contained 3.0 g/L of a laundry treatment composition comprising 33.3wt% Linear Alkyl Benzene Sulfonate as a Surfactant (LAS), 33.3wt% of Na₂CO₃, and 33wt% of Na₂SO₄. The dyes were added at 0.008wt% to the laundry treatment composition. The solution was used to wash a piece of bleached, non-mercerized, white, woven Egyptian cotton cloth at a liquor to cloth ratio of 30:1. Washes consisted of agitating the cloth in solution for 30 minutes, then rinsing the cloth twice in water and drying in the air. The experiment was repeated with the addition of dyes to the laundry treatment composition.

The dye structures and results are summarized in Table 1 below:

| **Bis Azo Direct Violet dyes of This Invention** | |
|---|---|
| Dye name | Dye structure |
| **E1** | 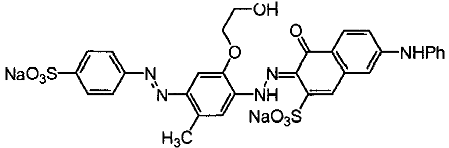 |
| **E2** | 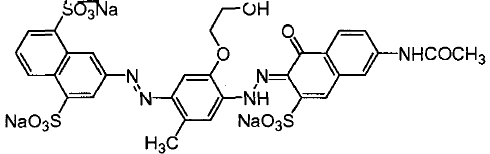 |

| **Comparative Example** | |
|---|---|
| **Direct Violet 9** | 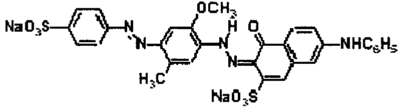 |

### Example 2

The woven cotton clothes whitened with E1, E2 and Direct Violet 9 were irradiated in a weatherometer for 2 hours with simulated sunlight (385 W/m² 300-800nm). The relative level of dye on the cloth before and after irradiation was measured using a reflectometer and expressing the spectra as K/S = (1-R²)/2R, where R is the %reflectance/100. The relative dye loss for:
Direct Violet 9 : E1 : E2
was
1.0 : 0.8 : 0.6

E1 and E2 are more photostable than Direct Violet 9 when applied to cotton cloth under wash conditions.

### Exemplary Base Powder Formulations A, B, C and D

| **Formulation** | **A** | **B** | **C** | **D** |
|---|---|---|---|---|
| NaLAS | 25 | 10 | 12 | 14 |
| NI(7EO) | - | 2 | - | 10 |
| SDS | 5 | 10 | | |
| Soap | - | - | - | 2 |
| SLES (2EO) | 2 | - | - | 2 |
| Na tripolyphosphate | - | 15 | - | - |
| Zeolite A24 | 2 | - | - | 17 |
| Sodium silicate | 15 | 4 | 5 | 1 |
| Sodium carbonate | 35 | 20 | 30 | 20 |
| Sodium sulphate | 10 | 33 | 40 | 22 |
| Carboxymethylcellul ose | 0.2 | 0.3 | - | 0.5 |
| Polyacrylate MW 4500 | - | - | - | 0.5 |
| Sodium chloride | - | - | - | 5 |
| lipase | 0.005 | 0.01 | - | 0.005 |
| Protease | 0.005 | 0.01 | - | 0.005 |
| Amylase | 0.001 | 0.003 | - | - |
| Cellulase | - | 0.003 | - | - |
| Acid Violet 50 | 0.0025 | 0.002 | - | 0.0012 |
| E1 | 0.0001 | - | - | 0.0003 |
| E2 | | 0.0005 | | |
| E5 | | | 0.00015 | |
| Disperse violet 28 | - | 0.0002 | - | 0.0010 |
| Fluorescer | 0.1 | 0.15 | 0.05 | 0.3 |
| Water/impurities/ minors | remainder | remainder | remainder | remainder |

Formulations were made using Lipex as the lipase, Savinase and Polarzyme as the protease, Carezyme as the cellulose and Stainzyme as the amylase.

Disperse violet 28 is included as a post dosed 50 micron spray dried granule containing 10% dye and 90% lignin sulfonate.

Acid Violet 50 is added via a post dosed 75 micron spray dried granule contain 50wt% dye, 45wt% Na₂SO₄ and 5 wt% sodium carboxymethylcellulose.

The bis azo dye of the invention was added either via addition to the detergent slurry before spray drying or a post-dosed granule containing 0.05wt% dye on sodium carbonate or zeolite.

### Exemplary Base Liquid Formulations A, B, C and D

| **Formulation** | **A** | **B** | **C** | **D** |
|---|---|---|---|---|
| NaLAS | 14 | 10 | 15 | 12 |
| NI(7EO) | 10 | 2 | 21 | 0 |
| SLES(3EO) | 7 | 10 | 7 | 12 |
| Soap | 2 | 4 | 1 | 0 |
| Citric acid | 1 | 1 | - | 1 |
| glycerol | 0 | 1 | 5 | 0 |
| Propylene glycol | 5 | 3 | 0 | 4 |
| Sodium chloride | 1 | - | - | - |
| Ethoxylated polyethylene imine | 0.5 | 2 | - | - |
| Triethanol amine | 0 | 0.5 | 3 | 1 |
| perfume | 0.2 | 0.1 | 0.3 | 0.4 |
| Protease | 0.005 | 0.01 | - | 0.005 |
| Amylase | 0.001 | 0.003 | - | - |
| lipase | - | 0.003 | - | - |
| Fluorescer | 0.1 | 0.15 | 0.05 | 0.3 |
| E1 | 0.0001 | 0.003 | 0.0002 | 0.00005 |
| Acid Violet 50 | 0.002 | 0.0002 | 0 | 0.001 |
| Disperse Violet 28 | 0.001 | 0.001 | 0.002 | 0 |
| Water/impurities/ minors | remainder | remainder | remainder | remainder |

For both powder and liquids formulations, enzyme levels are given as percent pure enzyme. NI(7EO) refers to R-(OCH₂CH₂)ₙOH, where R is an alkyl chain of C12 to C15, and n is 7. NaLAS is linear alkyl benzene sulphonate (LAS) and (SLES(3EO)) is C₁₂-C₁₈ alkyl polyethoxylate (3.0) sulphate, SDS is sodium dodecyl sulphate.

## Claims

1. A laundry treatment composition comprising:
(i) from 2 to 70 wt% of a surfactant; and,
(ii) from 0.00001 to 0.5 wt%, of a bis-azo oxyalkylene dye, wherein the bis-azo oxyalkylene dye is selected from structure (I) and structure (II): 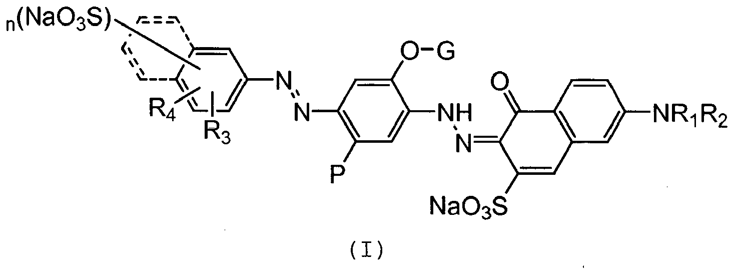 and 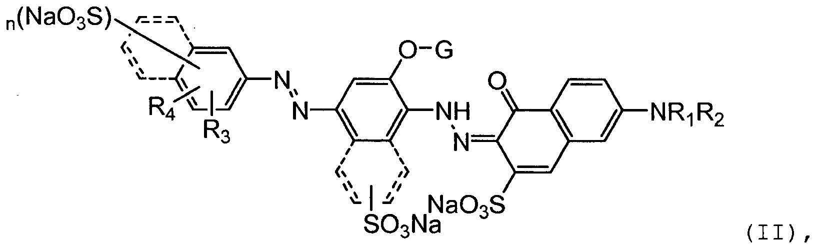 wherein:
n is selected from: 0; 1; and, 2;
R₁ is H; and CH₃;
R₂ is selected from: COCH₃; COC₂H₅; H; and, Ph;
R₃ and R₄ are independently selected from: H; Me; and, Et;
P is selected from: C1-C4-alkyl; OC1-C4-alkyl; and, an oxyalkylene group having one or more repeating units; and, G is an oxyalkylene group having 1 or more repeating units.

2. A laundry treatment composition according to claim 1, wherein G is an oxyalkylene group having from 1 to 20 repeating units.

3. A laundry treatment composition according to claim 1, wherein the G is an oxyalkylene group selected from:
[(CH₂CR₅HO)ₓ(CH₂CR₆HO)_{y}R₇] wherein x+y ≤ 5, wherein y ≥ 1 and z = 0 to 5, R₅ is selected from: H; CH₃; CH₂O(CH₂CH₂O)_{z}H and mixtures thereof; R₆ is selected from: H; CH₂O(CH₂CH₂O)_{z}H and mixtures thereof; and, R₇ is selected from: H; and, CH₃.

4. A laundry treatment composition according to claim 1, wherein the oxyalkylene group is selected from: ethylene oxide; propylene oxide; glycidol oxide; butylene oxide; and, mixtures thereof.

5. A laundry treatment composition according to claim 1, wherein P is Me.

6. A laundry treatment composition according to claim 1, wherein G is: (CH₂CH₂O)ₘH wherein m = 1 to 4.

7. A laundry treatment composition according to claim 1, wherein n is selected from: 1 or 2;

8. A laundry treatment composition according to any preceding claim, wherein the dye is of structure (I).

9. A laundry treatment composition according to any preceding claim, wherein laundry treatment composition comprises a perfume in the range from 0.001 to 3 wt %,

10. A method of treating a laundry textile, the method comprising the steps of:
(i) treating a textile with an aqueous solution of the bis-azo oxyalkylene dye as defined in any one of the preceding claims, the aqueous solution comprising from 0.1 ppb to 500 ppm of the bis-azo oxyalkylene dye and, from 0.0 g/L to 3 g/L of a surfactant;
(ii) optionally rinsing; and,
(iii) drying the textile.

## Patentansprüche

1. Wäschebehandlungszusammensetzung,
die Folgendes aufweist:
(i) 2 bis 70 Gew.-% eines Tensids und
(ii) 0,00001 bis 0,5 Gew.-% eines Bisazooxyalkylen-Farbstoffs, wobei der Bisazooxyalkylen-Farbstoff aus der Struktur (I) und der Struktur (II) ausgewählt ist: 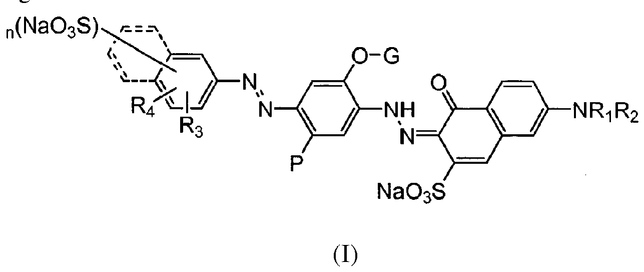 und 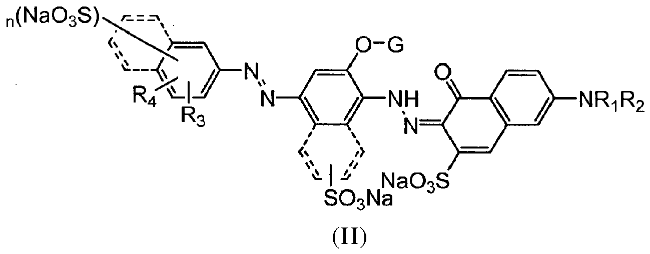 worin:
n aus 0, 1 und 2 ausgewählt ist;
R1 gleich H und CH₃ ist;
R₂ aus COCH₃, COC₂H₅, H und Ph ausgewählt ist;
R₃ und R₄ unabhängig voneinander aus H, Me und Et ausgewählt sind;
P aus C₁-C₄-Alkyl, OC₁-C₄-alkyl und einer Oxyalkylengruppe mit einer oder mehreren Struktureinheiten ausgewählt ist; und
G eine Oxyalkylengruppe mit 1 oder mehr Struktureinheiten ist.

2. Wäschebehandlungszusammensetzung nach Anspruch 1,
wobei G eine Oxyalkylengruppe mit 1 bis 20 Struktureinheiten ist.

3. Wäschebehandlungszusammensetzung nach Anspruch 1,
wobei G eine Oxyalkylengruppe ist, die ausgewählt ist aus:
[(CH₂CR₅HO)ₓ(CH₂CR₆HO)_{y}R₇], wobei x + y • 5 und wobei y ≥ 1 und z = 0 bis 5 sind, R₅ aus H, CH₃, CH₂O(CH₂CH₂O)_{z}H und Gemischen davon ausgewählt ist; R₆ aus H, CH₂O(CH₂CH₂O)_{z}H und Gemischen davon ausgewählt ist, und R₇ aus H und CH₃ ausgewählt ist.

4. Wäschebehandlungszusammensetzung nach Anspruch 1,
wobei die Oxyalkylengruppe aus Ethylenoxid, Propylenoxid, Glycidoloxid, Butylenoxid und Gemischen davon ausgewählt ist.

5. Wäschebehandlungszusammensetzung nach Anspruch 1,
wobei P gleich Me ist.

6. Wäschebehandlungszusammensetzung nach Anspruch 1,
wobei G gleich (CH₂CH₂O)ₘH ist, wobei m = 1 bis 4 ist.

7. Wäschebehandlungszusammensetzung nach Anspruch 1,
wobei n aus 1 oder 2 ausgewählt ist.

8. Wäschebehandlungszusammensetzung nach einem der vorstehenden Ansprüche, wobei der Farbstoff die Struktur (I) hat.

9. Wäschebehandlungszusammensetzung nach einem der vorstehenden Ansprüche, wobei die Wäschebehandlungszusammensetzung einen Duftstoff im Bereich von 0,001 bis 3 Gew.-% aufweist.

10. Verfahren zum Behandeln von Textilien für die Wäscherei,
wobei das Verfahren die folgenden Schritte aufweist:
(i) Behandeln der Textilien mit einer wässrigen Lösung des Bisazooxyalkylen-Farbstoffs nach einem der vorstehenden Ansprüche, wobei die wässrige Lösung 0,1 ppb bis 500 ppm des Bisazooxyalkylen-Farbstoffs und 0,0 bis 3 g/l eines Tensids aufweist;
(ii) gegebenenfalls Spülen und
(iii) Trocknen der Textilien.

## Revendications

1. Composition de traitement de linge comprenant :
(i) de 2 à 70 % en poids d'un tensioactif ; et,
(ii) de 0,00001 à 0,5 % en poids, d'un colorant bis-azo oxyalkylène, dans laquelle le colorant de bis-azo oxyalkylène est choisi parmi la structure (I) et la structure (II) : 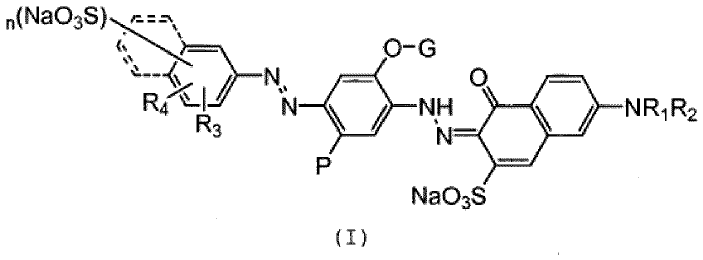 et 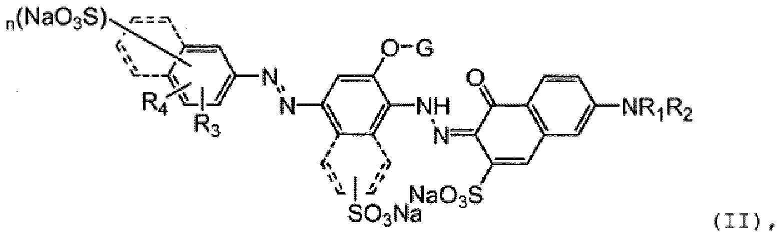 où :
n est choisi parmi : 0 ; 1 ; et, 2 ;
R₁ est H; et CH₃;
R₂ est choisi parmi : COCH₃ ; COC₂H₅ ; H ; et, Ph ;
R₃ et R₄ sont indépendamment choisis parmi : H ; Me ; et, Et ;
P est choisi parmi : un groupe alkyle en C1-C4 ; O(alkyle en C1-C4) ; et, un groupe oxyalkylène présentant une ou plusieurs unités répétitives ; et,
G est un groupe oxyalkylène ayant une ou plusieurs unités répétitives.

2. Composition de traitement de linge selon la revendication 1, dans laquelle G est un groupe oxyalkylène ayant de 1 à 20 unités répétitives.

3. Composition de traitement de linge selon la revendication 1, dans laquelle le G est un groupe oxyalkylène choisi parmi :
[(CH₂CR₅HO)ₓ(CH₂CR₆HO)_{y}R_{7]} où x+y ≤ 5, où y ≥ 1 et z = 0 à 5, R₅ est choisi parmi : H ; CH₃ ; CH₂O(CH₂CH₂O)_{z}H et des mélanges de ceux-ci ; R₆ est choisi parmi : H ; CH₂O(CH₂CH₂O)_{z}H et des mélanges de ceux-ci ; et, R₇ est choisi parmi : H ; et, CH₃.

4. Composition de traitement de linge selon la revendication 1, dans laquelle le groupe oxyalkylène est choisi parmi : l'oxyde d'éthylène ; l'oxyde de propylène ; l'oxyde de glycidol ; l'oxyde de butylène ; et, des mélanges de ceux-ci.

5. Composition de traitement de linge selon la revendication 1, dans laquelle P est Me.

6. Composition de traitement de linge selon la revendication 1, dans laquelle G est : (CH₂CH₂O)ₘH où m = 1 à 4.

7. Composition de traitement de linge selon la revendication 1, dans laquelle n est choisi parmi : 1 ou 2.

8. Composition de traitement de linge selon l'une quelconque des revendications précédentes, dans laquelle le colorant est de structure (I).

9. Composition de traitement de linge selon l'une quelconque des revendications précédentes, dans laquelle la composition de traitement de linge comprend un parfum dans l'intervalle de 0,001 à 3 % en poids.

10. Procédé de traitement d'un textile de linge, le procédé comprenant les étapes de :
(i) traitement d'un textile avec une solution aqueuse du colorant bis-azo oxyalkylène selon l'une quelconque des revendications précédentes, la solution aqueuse comprenant de 0,1 ppb à 500 ppm du colorant bis-azo oxyalkylène et, de 0,0 g/L à 3 g/L d'un tensioactif ;
(ii) rinçage éventuel ; et,
(iii) séchage du textile.
